(19) Europäisches Patentamt
European Patent Office
Office européen des brevets

(11) **EP 2 031 805 A1**

(12) **EUROPEAN PATENT APPLICATION**

(43) Date of publication:
**04.03.2009 Bulletin 2009/10**

(51) Int Cl.:
***H04L 12/56*** *(2006.01)*

(21) Application number: **07022970.3**

(22) Date of filing: **27.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **03.09.2007 EP 07017218**

(71) Applicant: **SIEMENS AKTIENGESELLSCHAFT 80333 München (DE)**

(72) Inventors:
• **Hund, Johannes**
  **82140 Olching (DE)**
• **Khan, Muddassir Gohar**
  **90411 Nürnberg (DE)**
• **Schwingenschlögl, Christian, Dr.**
  **85640 Putzbrunn (DE)**
• **Ziller, Andreas**
  **81827 Munchen (DE)**

(54) **Packet-type based resilience using network coding**

(57)    The present invention relates to transmitting of packets in a communications network, wherein the packets to be transmitted are marked according to importance levels of the packets and wherein the transmitting of the packets is performed in dependence of importance levels of said packets at least one time encoded and/or unencoded. In particular, the present invention relates to a corresponding method, to sending and receiving devices involved in said transmission of packets, a computer program product comprising a code configured to implement the method, and a data carrier comprising the computer program product.

# FIG 1

EP 2 031 805 A1

**Description**

The present invention relates to a method for transmitting packets in a communications network, to corresponding sending and receiving device, to a computer program product configured to implement said method, and to a data carrier comprising the computer program product.

BACKGROUND OF THE INVENTION

Error proneness is still an issue in modern networks. Especially wireless networks suffer due to packet drops, which significantly decrease the performance of the network. The reliability of a network can also be addressed by quality of service (QoS) mechanisms. However, those measurements address the problem rather indirect with acknowledgments, whose absence trigger retransmits of lost packets or multipath routing. It is also possible to apply traditional forward error correction (FEC) schemes to the data streams. Those methods are able to restore lost packets through redundant information, wherein the sender adds redundant data to its messages, which allows the receiver to detect and correct errors (within some bound) without the need to ask the sender for additional data. However, those mechanisms typically cause additional workload combined with high computing efforts.

In the known state of the art, approaches to differentiate between different packets or traffic flows exist. Examples for such approaches are, e.g., integrated services (IntServ) specifying a fine-grained QoS system or Differentiated Services (DiffServ) specifying a coarse-grained QoS system. As already mentioned, also typical forward error correction (FEC) schemes are related to the problem sketched above. However, the mentioned techniques of state of the art still have drawbacks with regard to the performance of communications networks, in particular, due to packet drops or additional workload, for example.

SUMMARY OF THE INVENTION

The object of the present invention is to improve transmission of packets in a communications network.

This object is achieved by a method according to claim 1, a sender according to claim 10, a transmitter according to claim 11, a computer program product according to claim 14, and a data carrier according to claim 16.

Further embodiments of the present invention are presented exemplary by the dependent claims.

In particular, said object is achieved by a method for transmitting packets in a communications network, said method comprising: marking said packets according to importance levels of said packets; and transmitting said packets in dependence of importance levels of said packets at least one time encoded and/or unencoded. In this way, for example, more important packets can be transmitted more often encoded.

Thus, more important packets are made more "resilient", i.e. they become more robust than less important packets. Further, the coded transmission ensures a good real-time behaviour and less communications overhead.

A packet to be transmitted encoded can be encoded by using a combination function on said packet to be transmitted encoded and on a further unencoded packet. Here, by encoding a packet to be transmitted by combination with another packet to be transmitted the communications overhead can be reduced.

Further, the packet to be transmitted encoded and said further unencoded packet may be combined by said combination function only once. Thus, it is avoided that a combination of two packets to be transmitted is used only once. In this manner and a further means is provided to reduce the communications overhead and to provide a good real-time behaviour. Furthermore, combining of a more important packet with different other packets ensures more "resilient", i.e., more robust transmission of the more important packets.

As a combination function a xor-function may be used, for example. This function is simple to implement. Therefore, an effective and fast encoding can be provided.

The number of transmitting a packet is determined by importance level of the packet. These importance levels may be determined with regard to a given system or environment, thus, a flexible implementation of the present invention becomes possible. Importance level of a packet may be determined, for example, by importance of application of said packet and/or by importance of content of said packet. Here, different solutions and ways for determining of importance levels are possible, not listed in more detail for sake of conciseness.

If a packet has an importance level higher than 1, the packet can be sent at least one time unencoded. Further, the number of sending said packet encoded can be determined as the number of transmitting minus one.

Further, the object of the present invention is achieved by a sender or a sending entity for transmitting packets in a communications network, said sender being configured to maintain all packets to be transmitted on a particular link and to transmit said packets by using the method sketched above and described in more detail below.

It has to be understood, that the sender or the sending entity will be configured such, that the steps explained as method steps on sending side can be performed by the sender.

Additionally, said object is achieved by a receiver or receiving entity for receiving packets in a communications network, said receiver being configured to receive packets being transmitted by use of the method sketched above and described in more detail below and to decode a received encoded packet by use of a received unencoded packet or by use of a decoded received packet.

The receiver can be configured to decode the received encoded packet by applying a xor-function to the received encoded packet and to the received unencoded packet.

Also with regard to the receiver or receiving entity, respectively, it has to be understood, that the receiver will be configured such, that the steps explained as method steps on receiving side can be performed by the receiver.

Additionally, the object of the present invention is achieved by computer program product comprising a code, wherein the code is configured to implement the method sketched above and described in more detail below. The computer program product can be comprised in a data carrier.

Further, the object of the present invention is achieved by a data carrier comprising a computer program product as sketched above.

In general, the main difference to generally known state of the art and/or one of positive effects of the present invention is that it achieves a high reliability with less communication overhead and also has good real-time behaviour. This is enabled among others due to the fact, that different coding strategies can be used instead of simple multiple transmissions or retransmissions.

BRIEF DESCRIPTION OF THE DRAWINGS

The present invention will be more clearly understood from the following description of the preferred embodiments of the invention read in conjunction with the attached drawings, in which:

Fig. 1 presents a flow diagram representing main steps of the method for transmitting packets in a communications network according to an embodiment of the present invention;

Fig. 2 presents a flow diagram of transmitting packets marked with respect to their importance levels according to an embodiment of the present invention;

Fig. 3 presents the transmission of packets from a sender to a receiver according to an embodiment of the present invention; and

Fig. 4a presents an encoded packet transmitted according to an embodiment of the present invention; and

Fig. 4b presents a not encoded packet transmitted according to an embodiment of the present invention.

DESCRIPTION OF THE PREFERRED EMBODIMENTS

In this invention, we present exemplary, as an embodiment, an end-to-end QoS scheme, which addresses the reliability of a data stream via network coding.

The basic idea behind the present invention is that more important packets are used for coded transmissions more often to make them more "resilient", i.e., they become more robust than less important packets.

Therefore, when using Internet Protocol version 4 (IPv4) as an example for further explanation of the present invention, we use the Type-of-Service field and as extension the unused 14th and 15th bit of the IPv4 header to include the priority level or importance level in the packet. The importance (level) of a packet can be comprised out of or determined by the value of the importance of the application and/or the importance of the content of the packet itself. The importance (level) is understood as a numerical value and is combined by a sum function.

It is foreseen that an end-to-end connection over multiple hops exist, where packets with different importance levels are transmitted. Packets can be transmitted in dependence of their importance (levels) multiple times, encoded and/or unencoded. Repeated transmissions are referred as resends.

The count of resends is determined by the sender by the importance level by the following function:

$$resend\_count = \left[ \frac{importance\_level}{number\_of\_precedence\_levels} \cdot (max\_resend\_count + 1) \right]$$

Transmitted packets are encoded if they comprise out of combination of two unencoded packets. As a combination function, the xor-function can be used.

Thus, encoding is performed by combining two (unencoded) packets, for example, by use of the xor-function. However, also other ways of combining packets for encoding purposes can be used according to the present invention.

The sender maintains a priority queue as output queue, which includes all packets, which have to be sent on a particular link. The order of the packets of the queue is as follows, with descending priority: 1. importance, time of enqueuing.

The decision, whether a packet is transmitted encoded or not encoded, is done by the sender using the following algorithm:

```
while(true) {
    packet = queue->first();
    if ((!packet->isSentUnencoded && packet->priority > 0)
          || queue->length==1) {
        packet->send();
        packet->resend--;
        packet->isSentUnencoded = true;
    }
    else {
        do {
            p2 = queue->getNextPacket();
            if(!p2){ //already encoded with all packets
                packet->send();
                packet->resend--;
                packet->isSentUnencoded = true;
                break;
            }
        } while(packet->wasCodedWith->contains(p2))
        packet->sendEncodedWith(p2);
        packet->wasCodedWith->add(p2);
        p2->wasCodedWith->add(packet);
        p2.resend--;
        packet.resend--;
    }
    for each packet in queue {
        if(packet->resend < 0) delete packet;
    }
}
```

In the following, a short explanation of terms used in the pseudo code is provided. In this connection, the term "packet" may represent, for example, a class, which encapsulates a packet with the following properties and methods:

- *is Sent Unencoded* represents a Boolean expressing, whether the packet was already sent unencoded;
- *resend* represents an integer for the resend counter;
- *was Coded With* represents a container of references to other packets, with which the packet was already sent encoded;
- *send()* represents a method, which sends the packet out unencoded;
- *send Encoded With(packet)* represents a method, which sends out this packet encoded with another packet given as parameter;
- *read DSCP (packet)* will return the precedence class from the DSCP field of the packet;
- the class *queue* encapsulates the transmit queue and has the following members:

  o first represents a method, which will return the first packet in the queue;
  o *length* will return the length of the queue:
  o *get Next Packet* will iteratively return the next packet in queue or *null* if it has reached the last packet;
  o *sort By Precedence()* will sort the queue according to the packets precedence.

The algorithm is build such, that a packet with a *resend_count* higher than 0 will definitely be sent at least one time unencoded and (*resend_count-1*) times encoded. If the first packet was already sent unencoded and has resends, it is sent again encoded with the next packet in queue. No combination should be sent twice. If a combination was already sent out, the less-important packet is exchanged with the next packet, and this new combination is sent.

By convention transmitted packets include those extra fields:

| Syntax | Size |
|---|---|
| encoded | 1 bit |
| if(encoded == 1) { | |
|      source_packet_id_1 | n bit |
|      source_packet_id_2 | n bit |
| } | |
| else | |
| { | |
|      packet_id | m bit |
| } | |

The flag *encoded* is set to 1 in case the particular packet is encoded. In that case, the two following fields identify the packets, which are the sources of the encoded packet. In case, the encoded flag is 0, the following field includes the identifier of that particular packet. The identifier of a packet can be either an n (or m) bit hash or a succeeding number.

With the help of the extra field, the receiver can determine, whether a packet is encoded or not. It maintains a list including all (or a sufficient number of) the packets, which it has either received unencoded or has decoded. It also maintains a list of all (or an appropriate number) of undecoded packets. On reception of an encoded packet and on regular intervals on the list of undecoded packets, it determines if it can decode the packets with received unencoded or already decoded packets. It can decode a packet if it has at least one of the two source packets, which have been used to encode that packet. In that case, it decodes the packet by the application of the xor-function to the encoded and the source packet.

The method is able to differentiate between different traffic classes, which it prioritizes in dependence of their importance. This can be done on a per-flow basis as well as on a per-packet basis within the flows. Thus, it is possible to override the flow priority for certain packets within the flow. The priority scheme increases the reliability of more important packets on the cost of the reliability of less important packets. This allows especially the preference of important packets on the cost of the reliability of less important packets. This allows especially the preference of important management packets (e.g. acknowledgements) with the effect that an overall performance gain can be achieved (e.g. less retransmits due to lost acknowledgements).

Important packet types could be, for example:

- Transmission Control Protocol (TCP) acknowledgements (ACK)
  Here, if a TCP ACK is not delivered within the TCP timeout, the sender will resend the data, which will congest the network.
- Internet Control Message Protocol (ICMP) messages ICMP messages are used, for example, to control, among other things, whether a target is reachable or not. If a host keeps trying to send until he gets a "destination unreachable" message, it will congest the network. Furthermore, some applications could use ICMP pings as heartbeats to see, whether the destination is reachable.
- Domain Name System (DNS)
  If an application cannot reach a DNS server within a timeout, it might assume, that it is not connected to the internet and bring up a user error.
- Dynamic Host Configuration Protocol (DHCP) queries and responses
  Dynamic host configuration protocol can be used to configure a host's IP address, its subnet mask, default gateway and other things. Its crucial that a DHCP packet arrives on time to configure a host.

In the following, an example run of the algorithm presented above is exemplary sketched.

It is supposed, that three applications 1, 2, and 3 want to send three packets. These packets are marked due to the importance of the application with the following precedence levels:

- 5 (Express forward) for packet 1;
- 3 (Class 3) for packet 2; and
- 2 (Class 2) for packet 3.

It is assumed, that the packet of application 2 has an important packet type (e.g., a TCP ACK). Therefore, the importance of the packet in this example is increased by two. Thus, the packet two will now be handled with precedence level 5. If the packet type of application 1 and 3 are rather less important, the precedence levels of these packet types will be remain the same.

For a defined maximum resend count of 3 the resend counters would be calculated as follows:

- 2 resends for packet 1;
- 2 resends for packet 2; and
- 1 resend for packet 3.

When following the rules mentioned above, the packets will be sent out as follows:

- send packet 1;
- send combination of 1 xor 2;
- send combination 1 xor 3;
- send packet 2; and
- send combination 2 xor 3.

Two of the above packets can be lost, for example. However, the important packets will always be recovered without having to be retransmitted (except the case, when the two unencoded packets are lost, then, one of the packets has to be retransmitted).

In the following, the present invention as exemplarily explained above will be described for better understanding by use of figures.

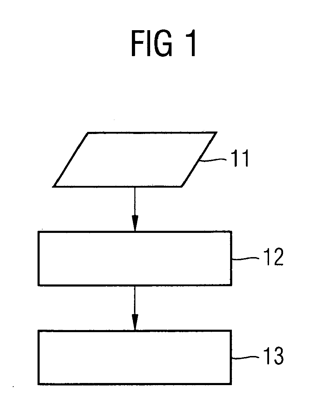

Fig. 1 presents a flow diagram representing main steps of the method for transmitting packets in a communications network according to an embodiment of the present invention.

In Fig. 1 the box 11 presents all packets which have to be sent on a particular link. These packets 11 are marked 12 according to their importance levels and transmitted 13 in dependence of their importance levels at least one time encoded and/or unencoded, wherein more important packets are transmitted more often encoded.

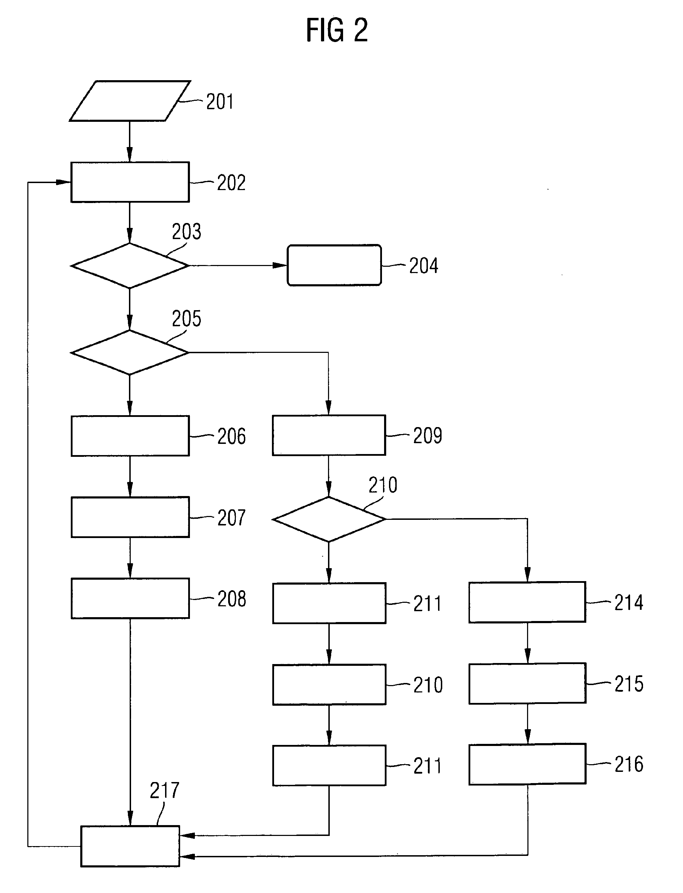

Fig. 2 presents a flow diagram of transmitting packets marked with respect to their importance levels according to an embodiment of the present invention. In general, the steps presented in the flow diagram correspond to the steps as provided in the pseudo code above.

The starting box 201 in Fig. 2 represents packets, which have to be sent on a particular link and which are marked according to their importance levels, thus, packets being direct or indirect outputs of step 12 of Fig. 1. In step 202 a first available packet to be sent and marked according to this importance level is requested or taken from a container like a queue, list, for example, containing packets 201. In step 203, it is checked, whether there was such a packet available. If not, the transmission is finished 204. Otherwise, if a packet was available, it is checked 205, whether this packet has already been sent unencoded, which priority or importance this packet has and how many packets have to be transmitted. If the packet was not sent unencoded and if the priority or importance of the packet is higher than zero or if this packet only has to be sent at all (201 comprises this packet only), the packet is transmitted (sent) unencoded 206, the number of times of how often the packet should be transmitted again is decreased by one 207, and it is noted 208 that the packet has been sent unencoded. However, if the criterion 205 does not fit, a further packet to be transmitted and not already transmitted in combination with the packet is taken 209 from the input box 201. If no further packet was available 210, the packet is transmitted (sent) unencoded 211, the number of times of how often the packet should be transmitted again is decreased by one 212, and it is noted 213 that the packet has been sent unencoded. Otherwise, if a further packet was available 210, the packet is transmitted encoded 214 in combination with this further packet, it is noted 215, that the encoded transmission was performed by combining the packet with the further packet, and in both packets each of the corresponding numbers of times of how often the packets should be transmitted again is decreased 216 by one. In step 217, all packets, for which no further repeated transmission is required, are deleted from the set or container 201 of packets to be transmitted. Thus, refresh the container 201 of packets to be transmitted is refreshed in step 217. After that, the transmission of packets is started again with the step 202.

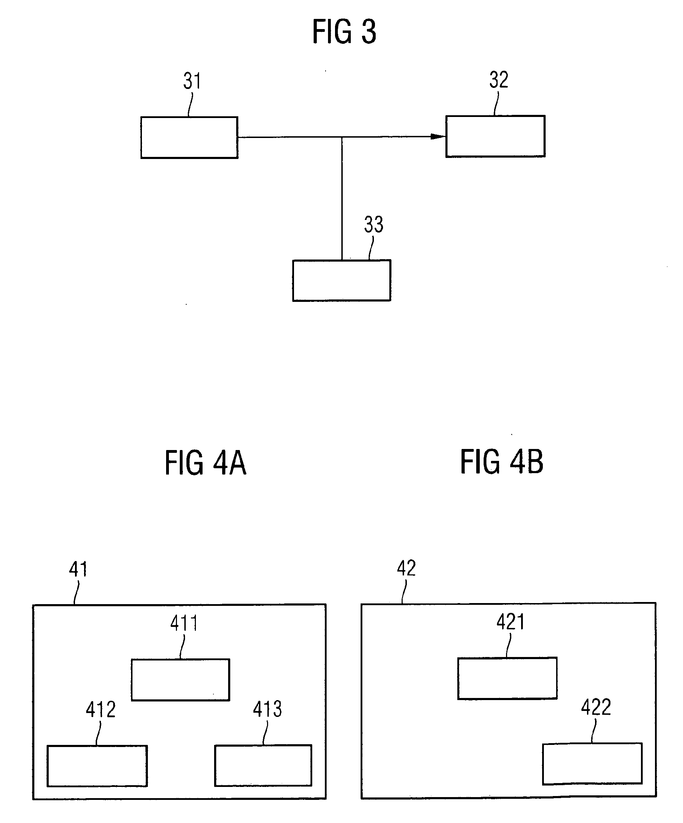

Fig. 3 presents transmission of packets 33 from a sender 31 to a receiver 32 according to an embodiment of the present invention.

The sender 31 is configured to maintain, held or manage all packets 33 to be transmitted on a particular link and to transmit these packets 33 as explained above. The receiver 32, in turn, is configured to receive the packets 33 from the sender 31, wherein these packets 33 have been transmitted by the sender 31 as explained above in more detail. Additionally, the receiver 32 is configured to decode a received encoded packet 33 by use of a packet received unencoded or by use of a packet, which was received decoded. In the case, a xor-function has been used to encode a combination of two packets to be transmitted on the side of the sender 31, the receiver 32 is configured to decode said received encoded packet 33 by applying the xor-function either to the received encoded packet 33 and to said received unencoded packet or to the received encoded packet 33 and to said received unencoded packet.

Fig. 4a presents an encoded packet 41 transmitted according to an embodiment of the present invention. The packet 41 comprises an encoded bit 411 pointing out that the packet 41 is an encoded packet, and identification numbers 412, 413 of the packets being the sources of the encoded packet 41.

Fig. 4b presents a not encoded or unencoded packet 42 transmitted according to an embodiment of the present invention. The packet 42 comprises a (encoded/unencoded) bit 421 pointing out that the packet 42 is an unencoded packet and the identification number 422 of the packet 42.

Thus, the present invention relates to transmitting of packets in a communications network, wherein the packets to be transmitted are marked according to importance levels of the packets and wherein the transmitting of the packets is performed in dependence of importance levels of said packets at least one time encoded and/or unencoded. In particular, the present invention relates to a corresponding method, to sending and receiving devices involved in said transmission of packets, a computer program product comprising a code configured to implement the method, and a data carrier comprising the computer program product.

It is noted that the present invention is not restricted to the above embodiments. In particular, it can be applied in connection with any communications system comprising transmission of data packets. The embodiments presented above may, thus, vary within the scope of the attached claims in dependence of the environment or concrete system used for communications of (packet) data between two entities of a communications system - a sending/transmitting entity and a receiving entity.

**Claims**

1.  A method for transmitting packets in a communications network, said method comprising:

    - marking said packets according to importance levels of said packets; and
    - transmitting said packets in dependence of importance levels of said packets at least one time encoded and/or unencoded.

2.  The method according to claim 1, wherein more important packets are transmitted more often encoded.

3.  The method according to claim 1 or 2, wherein a packet to be transmitted encoded is encoded by using a combination function on said packet to be transmitted encoded and on a further unencoded packet.

4.  The method according to claim 3, wherein said packet to be transmitted encoded and said further unencoded packet are combined by said combination function only once.

5.  The method according to claim 3 or 4, wherein a xor-function us used as said combination function.

6.  The method according to any one of preceding claims, wherein a number of transmitting a packet is determined by an importance level of said packet.

7.  The method according to claim 6, wherein said importance level of said packet is determined by importance of application of said packet and/or by importance of content of said packet.

8.  The method according to claim 6 or 7, wherein, if said packet has an importance level higher than 1, said packet is sent at least one time unencoded.

9.  The method according to any one of claims 6 to 8, wherein, if said packet has an importance level higher than 1, a number of sending said packet encoded is determined as the number of transmitting minus one.

10. A sender for transmitting packets in a communications network, said sender being configured to:

    maintain all packets to be transmitted on a particular link; and

transmit said packets by using a method according to any one of claims 1 to 9.

11. A receiver for receiving packets in a communications network, said receiver being configured to:

receive packets being transmitted according to any one of claims 1 to 9; and
decode a received encoded packet by use of a received unencoded packet or by use of a decoded received packet.

12. The receiver according to claim 11 being configured to decode said received encoded packet by applying a xor-function to said received encoded packet and to said received unencoded packet.

13. The receiver according to claim 11 being configured to decode said received encoded packet by applying a xor-function to said received encoded packet and to said received unencoded packet.

14. A computer program product comprising a code, said code being configured to implement a method according to any one or claims 1 to 9.

15. The computer program product according to claim 14, said computer program product being comprised in a data carrier.

16. A data carrier comprising a computer program product according to claim 14.

# FIG 1

# FIG 2

# FIG 3

31

32

33

# FIG 4A

41

411

412    413

# FIG 4B

42

421

422

**European Patent Office**

**EUROPEAN SEARCH REPORT**

Application Number

EP 07 02 2970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 5 617 541 A (ALBANESE ANDRES [US] ET AL) 1 April 1997 (1997-04-01)<br><br>* column 2, line 53 - line 57 *<br>* column 3, line 16 - line 23 *<br>* column 3, line 48 - line 64; figure 7 *<br>* column 6, line 43 - line 65 *<br>----- | 1-5,7-16<br><br>6 | INV.<br>H04L12/56 |
| Y | US 6 658 019 B1 (CHEN SHU-CHIN SU [TW] ET AL) 2 December 2003 (2003-12-02)<br>* column 2, line 32 - line 38 *<br>* column 4, line 24 - line 35 *<br>----- | 6 | |

TECHNICAL FIELDS
SEARCHED      (IPC)

H04L

The present search report has been drawn up for all claims

| Place of search | Date of completion of the search | Examiner |
|---|---|---|
| The Hague | 29 February 2008 | Tsuchiya, Kuni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 07 02 2970

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2008

| Patent document cited in search report | | Publication date | Patent family member(s) | | Publication date |
|---|---|---|---|---|---|
| US 5617541 | A | 01-04-1997 | NONE | | |
| US 6658019 | B1 | 02-12-2003 | TW | 444506 B | 01-07-2001 |

EPO FORM P0459

For more details about this annex : see Official Journal of the European Patent Office, No. 12/82